# EUROPÄISCHE PATENTSCHRIFT

(11) **EP 2 906 854 B1**
(45) Veröffentlichungstag und Bekanntmachung des Hinweises auf die Patenterteilung: **15.08.2018**
(21) Anmeldenummer: 13766312.6
(22) Anmeldetag: 24.09.2013
(51) Int. Cl.: F16G 11/00, A63B 29/02

(54) **PIN**
PIN
BROCHE

(30) Priorität: 11.10.2012 DE 202012103885 U
(43) Veröffentlichungstag der Anmeldung: 19.08.2015
(73) Patentinhaber: Schröder, Tim, 22113 Hamburg (DE)
(72) Erfinder: Schröder, Tim, 22113 Hamburg (DE)
(74) Vertreter: Groth, Wieland
(86) Internationale Anmeldenummer: PCT/EP2013/069804
(87) Internationale Veröffentlichungsnummer: WO 2014/056719

(56) Entgegenhaltungen:
- WO-A1-86/02709
- US-A- 315 859
- US-A1- 2004 170 471

## Beschreibung

Die Erfindung betrifft die Verwendung eines Pins zum Einstecken in einen Knoten eines Hauptseils, um dessen vollständiges Zusammenziehen zu verhindern.

In der DE 199 06 120 A1 ist eine Schlaufenvorrichtung beschrieben, die es ermöglicht, die Größe einer Seilschlaufe stufenlos zu verstellen. Dazu ist ein Seilende mit einem Knoten an einer Öse befestigt, während das Seil als Schlaufe über ein Klemmteil weitergeführt ist. Mit Hilfe des Klemmteils kann die Länge der Schlaufe stufenlos eingestellt werden.

Aus der DE 2 231 267 ist ein Endabschluss für Litzen und Seile bekannt. Der Endabschluss ist dabei auf ein Drahtseil aufgepresst oder aufgeschrumpft und greift in das Seil ein. Der Endabschluss weist einen Kragen mit wenigstens einer Lagerfläche auf, mit deren Hilfe das Seilende an einem Gegenstück befestigt werden kann.

Die US 4,661,077 betrifft eine Rettungseinrichtung mit einer in der Länge veränderbaren Schlaufe und einem kreisrunden Befestigungsstück mit zwei parallelen Seildurchführungen. Ein Seil wird unter Ausbildung der Schlaufe durch beide Seildurchführungen hindurchgeführt und außerhalb der zweiten Seildurchführung mit einem Knoten gesichert.

Die WO 2011/157379 A1 betrifft einen an einem Rohrabschnitt angeordneten Pin, wobei ein Seil durch den Rohrabschnitt hindurchführbar ist und ein Seilende an dem Pin festgeknotet werden kann.

Aus der US 2004/0170471 A1 ist ein Bauteil eines Rahmengestelles bekannt mit mehreren Schienen. Das Gestell ist zum Aufbau einer Beschirmung bestimmt.

In der WO 86/02709 ist ein Befestigungselement mit einer Öse und einem Haken offenbart, wobei der Haken, durch den eine oder mehrere Ösen hindurchsteckbar sind, flexibel ist.

Nachteilig an den bekannten Vorrichtungen ist, dass sie das Lösen des Seiles nicht hinreichend erleichtern oder in der Handhabung relativ sperrig sind.

Es ist Aufgabe der Erfindung, eine eingangs genannte Verwendung eines Pins zur Verfügung zu stellen, die die Nachteile des Standes der Technik vermeidet.

Die Aufgabe wird durch eine eingangs genannte Verwendung eines Pins mit den Merkmalen des Anspruchs 1 gelöst.

Bevorzugte Ausführungsformen der erfindungsgemäßen Verwendung des Pins sind Gegenstand der Unteransprüche.

Der Pin wird erfindungsgemäß zum Einstecken in einen Knoten eines Hauptseils verwendet, um dessen vollständiges Zusammenziehen zu verhindern. Der Pin weist ein längliches Profil auf, mit einem durch den Knoten hindurchsteckbaren freien Ende, und an einem dem freien Ende gegenüberliegenden anderen Ende ist ein flexibles Fixiermittel mit wenigstens einem freien Fixiermittelende vorgesehen, das bei durch den Knoten hindurchgestecktem freien Ende außen um den Knoten legbar ist. Es können genau ein Fixiermittel, aber auch zwei, drei, vier oder eine höhere Anzahl an Fixiermitteln vorgesehen sein. Zwischen dem wenigstens einen freien Fixiermittelende und dem freien Ende des länglichen Profils ist ein lösbarer Verschluss vorgesehen.

Vorteilhafterweise verhindert das in den Knoten eingesteckte längliche Profil ein vollständiges Zuziehen des Knotens auch bei höchster Belastung. Das Profil ist vorzugsweise formstabil, ggf. leicht elastisch ausgebildet, wobei die durch Zugbelastung auf das Hauptseil wirkende Kraft durch den sich schließenden Knoten nicht zu einer Verformung des Profils führen darf, da das Profil in diesem Fall nicht mehr kraftarm aus dem Knoten herausgezogen werden kann.

Das längliche Profil kann ein Hohlprofil oder Vollprofil oder eine Mischform beider sein. Es besteht vorzugsweise vollständig aus Aluminium. Andere Materialen sind aber auch denkbar. Das längliche Profil weist vorzugsweise entlang seiner im Wesentlichen gesamten Längsausdehnung einen senkrecht zur Längsausdehnung konstanten Querschnitt auf. Das längliche Profil kann auch als Draht ausgebildet sein. Es ist vorzugsweise formstabil unter insbesondere seitlich auf das Profil wirkende Kräfte.

Wenn das längliche Profil hohl ausgebildet ist, kann ein weiteres Seil durch das Hohlprofil durchgeführt sein. Vorteilhafterweise weist das Hohlprofil zwei Öffnungen zum Durchführen des weiteren Seiles auf.

Der Pin ist zum einen durch den sich zuziehenden Knoten positionsfest im Knoten angeordnet, zum anderen wird der Knoten durch das außen um den Knoten herumgeführte und außen am Knoten anliegende Fixiermittel am Sich-Lösen gehindert. Der erfindungsgemäße Pin ermöglicht es so zum einen, den Knoten wieder zu lösen, auch wenn der Knoten unter hoher Zugbelastung stand und zum anderen, einen locker geschlagenen Knoten am Auseinanderfallen zu hindern.

Vorzugsweise ist das wenigstens eine flexible Fixiermittel wenigstens abschnittsweise elastisch ausgebildet. Dadurch ist eine bequeme Befestigung des Fixiermittels, das an einer Knotenseite eingesteckt, durch den Knoten hindurchgesteckt und auf der gegenüberliegenden Knotenseite wieder ausgetreten ist, um den Knoten herum und am freien Ende, mittels des Verschlusses möglich, wobei das Fixiermittel aufgrund seiner Elastizität einen Druck außen auf den Knoten ausübt und den Knoten so am Auseinanderfallen hindert.

In einer besonders bevorzugten Ausführungsform der Erfindung weist der Verschluss eine an einem freien Fixiermittelende angeordnete Öffnung auf, die zum Verschließen über das freie, durch den Knoten hindurchgesteckte Ende steckbar ist. Dabei handelt es sich um eine besonders einfache Ausführungsform des Verschlusses.

Insbesondere bei dieser Ausführungsform ist das freie Fixiermittelende vorzugsweise mit einem umgeschlagenen Gurtband verstärkt, wobei die Öffnung durch beide sich gegenüberliegende Abschnitte des Gurtbandes sowie das Fixiermittel selbst geführt ist.

Zum einen ermöglicht das Gurtband eine bequeme Handhabung des elastischen Fixiermittelendes beim Verschließen, also wenn die Öffnung über das durch den Knoten gesteckte freie Ende gezogen werden muss, um den Pin im Knoten zu befestigen, zum anderen wird die Stabilität der in das Fixiermittelende eingebrachten Öffnung erhöht.

In einer weiter bevorzugten Ausführungsform der Erfindung ist ein Zugmittel an dem anderen, dem freien Ende des länglichen Profils gegenüberliegend vorgesehen, das greifbar ist und mit dem der Pin aus dem Knoten herausziehbar ist. Bei dem Zugmittel kann es sich um ein Seil, vorzugsweise eine Reepschnur handeln. An der Reepschnur kann der in den Knoten eingesteckte Pin zum einen bei Bedarf wieder herausgezogen werden, da die Reepschnur eine hinreichende Stabilität aufweist, zum anderen kann der Pin, beispielsweise mittels der Reepschnur durch einen Klemmknoten am Hauptseil festgeknotet werden, um ein Herabfallen des Pins nach dessen Herausziehen zu verhindern.

Das Fixiermittel kann vorteilhafterweise als Fixierband ausgebildet sein. Fixierbänder sind kostengünstig erhältlich und reißfest.

Günstigerweise ist an dem anderen Ende des länglichen Profils eine Querschnittsvergrößerung vorgesehen, die ein Eindringen des länglichen Profils in den Knoten hinein über die Querschnittsvergrößerung hinaus verhindert. Somit kann das freie Ende bequem in den Knoten eingesteckt werden, ohne dass der Benutzer darauf achten muss, dass der Pin vollständig durch den Knoten hindurchgeschoben wird. Die Querschnittsvergrößerung, die vorzugsweise als senkrecht zur Längsausdehnung des Profils angeordnete Scheibe, vorzugsweise als Metallscheibe ausgebildet sein kann, dient als Durchrutschsicherung.

Die Erfindung wird anhand von drei Ausführungsbeispielen in drei Figuren beschrieben. Dabei zeigen:
- Fig. 1: eine perspektivische Ansicht einer ersten Ausführungsform des erfindungsgemäßen Pins,
- Fig. 2: eine perspektivische Ansicht einer zweiten Ausführungsform des erfindungsgemäßen Pins, der in einen Knoten eingesteckt ist,
- Fig. 3: eine perspektivische Ansicht einer dritten Ausführungsform des erfindungsgemäßen Pins, der ebenfalls in einen Knoten eingesteckt ist.

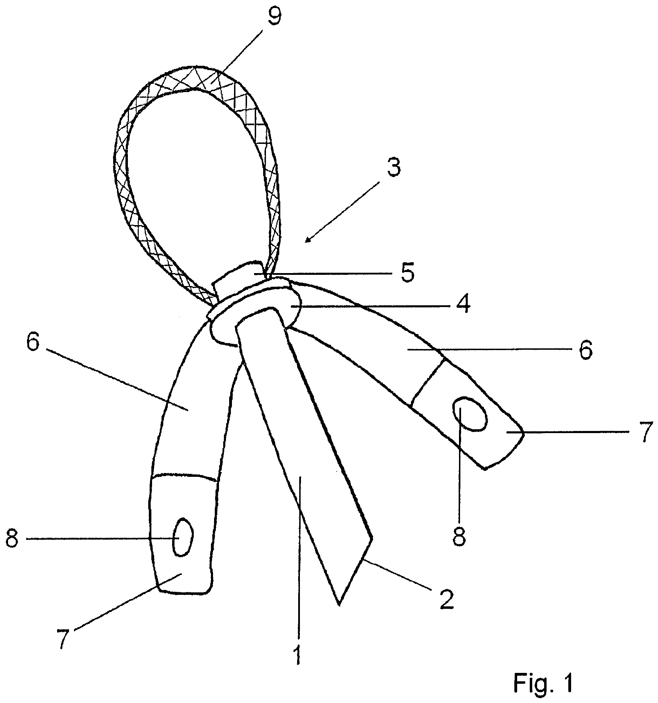

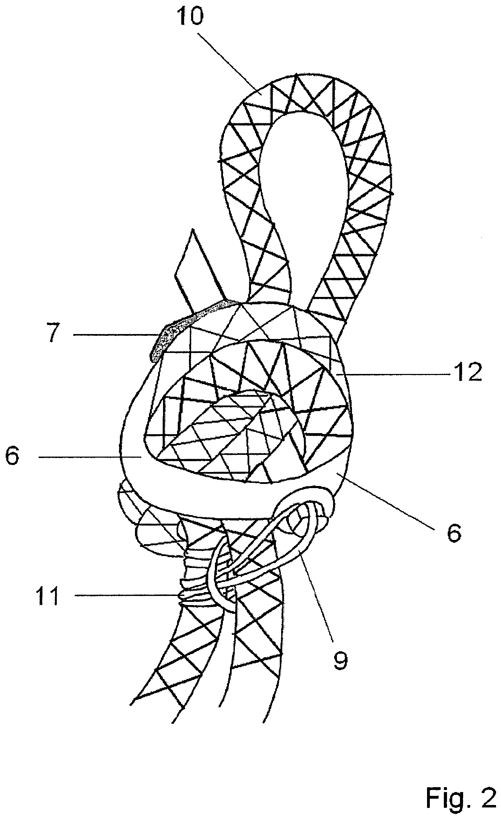

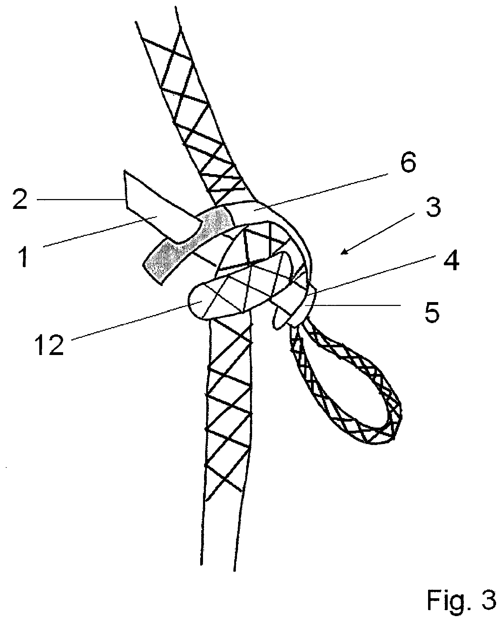

Fig. 1 zeigt den erfindungsgemäßen Pin in einer ersten Ausführungsform. Er umfasst einen aus Aluminium bestehenden Vollprofilstift 1 mit einem freien, abgeschrägten Ende 2. Der Vollprofilstift weist entlang seiner gesamten Längsausdehnung L einen konstanten Durchmesser und Querschnitt auf. Das freie Ende 2 des Vollprofilstifts 1 ist zum Einstecken in einen Knoten gem. Fign. 2 und 3 bestimmt. Am dem freien Ende 2 gegenüberliegenden anderen Ende 3 ist eine Scheibe 4 aus Metall mittels einer in das Vollprofil 1 eingeschraubten Schraube 5 befestigt. An einer dem freien Ende 2 abgewandten Seite der Scheibe 4 sind zwei baugleiche elastische Fixiermittel 6 befestigt, deren jeweils freies Ende mit einem umgelegten Gurtband 7 versehen ist. Durch beide umgelegten Abschnitte des Gurtbandes 7 sowie durch das von ihnen umschlossene freie Ende des Fixiermittels 6 ist eine Öffnung 8 eingebracht. Die Öffnung 8 ist so dimensioniert, dass sie über das freie Ende 2 steckbar ist.

An dem freien Ende 2 gegenüberliegenden anderen Ende 3 des Vollprofilstiftes 1 ist zusätzlich zur Schraube 5 und der Scheibe 4 eine Reepschnur 9 vorgesehen, die als einfache Schlaufe ausgebildet und mit beiden Enden am anderen Ende 3 befestigt ist. Die Festigkeit der Reepschnur 9 und deren Befestigung am anderen Ende 3 ist so bemessen, dass der Pin durch vom Benutzer ausgeübte Zugkraft an der Reepschnur 9 aus dem Knoten herausziehbar ist und dabei die beiden Öffnungen 8 der Fixiermittel vom freien Ende 2 abrutschen.

Fig. 2 zeigt eine, gegenüber der Ausführungsform in Fig. 1, abgewandelte zweite Ausführungsform des Pins mit einer, gegenüber der ersten Ausführungsform, verlängerten Reepschnur 9. Der Pin ist darüber hinaus gemäß seiner erfindungsgemäßen Bestimmung in den aus einem Hauptseil 10 gebildeten Knoten 12 eingeführt. Die Reepschnur 9 ist in ihrer Länge so bemessen, dass sie als Sicherung mittels eines Klemmknotens 11, der hier als Prusick-Knoten ausgebildet ist, am Hauptseil 10 fixiert werden kann. Das Hauptseil 10 ist in Form eines Sackstichs ausgebildet. Der Pin weist, wie in Fig. 1, zwei Fixiermittel 6 mit jeweils einem freien Ende auf, die jeweils außen um den Knoten 12 herum gelegt sind und mit ihren beiden Öffnungen 8 über das durch den Knoten hindurchgeschobene freie Ende 2 des Pins gesteckt werden. Auf diese Weise verhindert der durch den Knoten 12 gesteckte Pin ein vollständiges Zusammenziehen des Knotens 12 auch bei großen Zugbelastungen. Darüber hinaus fixieren die beiden elastischen Fixiermittel 6 den Knoten 12 in seiner Ausformung. Der Pin kann durch Ziehen an der Reepschnur 9 aus dem Knoten 12 herausgezogen werden, dabei rutschen die beiden Öffnungen 8 der freien Enden 2 der beiden elastischen Fixiermittel 6 über das freie Ende 2 ab und geben den Pin frei, so dass der Pin vollständig aus dem Knoten 12 herausgezogen werden kann. Durch den sich nach dem Herausziehen bietenden Freiraum im Inneren des Knotens 12 kann der Knoten 12 selbst leicht gelöst werden. Da herkömmliche Hauptseile 10 im Kletterbereich Bruchlasten von ungefähr 2 Tonnen aufweisen müssen, können insbesondere leicht elastisch ausgebildete Hauptseile 10 bei entsprechender Zuglast ausgesprochen festsitzende Knoten 12 ausbilden, die ohne herausziehbaren Pin mit der Hand nicht mehr lösbar sind. Es bedarf zum Lösen der Knoten 12 Werkzeuge wie Zangen oder Schraubenzieher, wobei die Gefahr der Beschädigung des Hauptseiles 10 besteht.

Durch die Krümmung des Hauptseils 10 im Knoten 12 kann die Bruchlast des Hauptseils um 20 % - 60 % verringert werden. Vorteilhafterweise wird der Krümmungsradius des Hauptseils 10 im Knoten durch den Pin verringert, so dass die Bruchlast des Knotens 12 wieder erhöht wird.

Fig. 3 zeigt eine dritte Ausführungsform des erfindungsgemäßen Pins, der gegenüber dem in Fig. 1 dargestellten Pin nur genau ein flexibles Fixiermittel 6 und nicht wie in Fig. 1 zwei flexible Fixiermittel 6 umfasst. Der Pin ist wiederum am freien Ende 2 abgeschrägt, am anderen Ende 3 ist eine den Querschnitt des Vollprofils 1 vergrößernde Scheibe 4 aus Edelstahl festgeschraubt. Das Vollprofil 1 ist im Querschnitt entlang seiner im Wesentlichen gesamten Längsausdehnung L konstant. Die Scheibe 4 führt zu einer Querschnittsvergrößerung am anderen Ende 3. Am anderen Ende 3 ist wiederum eine Reepschnur 9 in Form einer kurzen Schlaufe gem. Fig. 1 vorgesehen. Das Fixiermittel ist in den Fign. 1 - 3 als Gummiband ausgebildet.

### Bezugszeichenliste

1 Vollprofilstift
2 freies Ende
3 anderes Ende
4 Scheibe
5 Schraube
6 Fixiermittel
7 Gurtband
8 Öffnung
9 Reepschnur
10 Hauptseil
11 Klemmknoten
12 Knoten
L Längsausdehnung

## Patentansprüche

1. Verwendung eines Pins zum Einstecken in einen Knoten (12) eines Hauptseils (10), um dessen vollständiges Zusammenziehen zu verhindern, mit
einem länglichen Profil (1) mit einem freien durch den Knoten (12) hindurchsteckbaren Ende (2) und
wenigstens einem dem freien Ende (2) gegenüberliegend an einem anderen Ende (3) des Profils befestigten flexiblen Fixiermittel (6) mit wenigstens einem freien Fixiermittelende, das bei durch den Knoten (12) hindurchgestecktem freiem Ende (2) außen um den Knoten (12) legbar ist,
und einem lösbaren Verschluss zwischen dem freien Ende (2) und wenigstens einem der freien Fixiermittelenden, der das durch den Knoten (12) hindurchgesteckte freie Ende (2) mit dem wenigstens einen außen um den Knoten (12) gelegten Fixiermittelende lösbar verschließt.

2. Verwendung eines Pins nach Anspruch 1,
**dadurch gekennzeichnet, dass** das wenigstens eine Fixiermittel (6) wenigstens abschnittsweise elastisch ausgebildet ist.

3. Verwendung eines Pins nach Anspruch 1 oder 2,
**dadurch gekennzeichnet, dass** der Verschluss eine an dem wenigstens einen freien Fixiermittelende angeordnete Öffnung (8) aufweist, die zum Verschließen über das freie Ende (2) steckbar ist.

4. Verwendung eines Pins nach Anspruch 3,
**dadurch gekennzeichnet, dass** das wenigstens eine freie Fixiermittelende mit einem Gurtband (7) verstärkt ist.

5. Verwendung eines Pins nach Anspruch 4,
**dadurch gekennzeichnet, dass** die Öffnung (8) durch das Gurtband (7) geführt ist.

6. Verwendung eines Pins nach wenigstens einem der Ansprüche 1 bis 5,
**dadurch gekennzeichnet, dass** ein Zugmittel am anderen Ende vorgesehen ist, das greifbar ist und mit dem der Pin aus dem Knoten (12) herausziehbar ist.

7. Verwendung eines Pins nach Anspruch 6,
**dadurch gekennzeichnet, dass** das Zugmittel als Seil ausgebildet ist.

8. Verwendung eines Pins nach wenigstens einem der Ansprüche 1 bis 7,
**dadurch gekennzeichnet, dass** an dem anderen Ende (3) eine Querschnittsvergrößerung ausgebildet ist, die ein weiteres Eindringen des länglichen Profils in den Knoten (12) hinein über die Querschnittsvergrößerung hinaus verhindert.

9. Verwendung eines Pins nach Anspruch 8,
**dadurch gekennzeichnet, dass** die Querschnittsvergrößerung eine senkrecht zu einer Längsrichtung des Profils ausgebildete Scheibe (4) umfasst.

10. Verwendung eines Pins nach wenigstens einem der vorstehenden Ansprüche,
**dadurch gekennzeichnet, dass** das längliche Profil (1) als Vollprofil ausgebildet ist.

11. Verwendung eines Pins nach wenigstens einem der Ansprüche 1 bis 9,
**dadurch gekennzeichnet, dass** das längliche Profil (1) als Hohlprofil ausgebildet ist und zwei Öffnungen für ein weiteres Seil aufweist.

12. Verwendung eines Pins nach wenigstens einem der vorstehenden Ansprüche,
**dadurch gekennzeichnet, dass** das Fixiermittel als Fixierband (6) ausgebildet ist.

## Claims

1. Use of a pin for insertion into a knot (12) of a main cable (10) in order to prevent complete tightening thereof, comprising an elongated profile (1) with a free end (2) which can be inserted through the knot (12) and at least one flexible fixing means (6) which is fastened to another end (3) of the profile opposite the free end (2) and which comprises at least one free fixing means end which can be placed around the outside of the knot (12) when the free end (2) is inserted through the knot (12),
and also comprising a releasable closure between the free end (2) and at least one of the free fixing means ends, said closure releasably closing the free end (2) inserted through the knot (12) with the at least one fixing means end placed around the outside of the knot (12).

2. Use of a pin according to claim 1, **characterised in that** the at least one fixing means is designed to be elastic at least in some sections.

3. Use of a pin according to claim 1 or 2, **characterised in that** the closure has an opening (8) which is arranged on the at least one free fixing means end and can be fitted over the free end (2) for closing.

4. Use of a pin according to claim 3, **characterised in that** the at least one fixing means end is reinforced by a webbing strap (7).

5. Use of a pin according to claim 4, **characterised in that** the opening (8) is guided through the webbing strap (7).

6. Use of a pin according to at least one of claims 1 to 5, **characterised in that** at the other end a traction means is provided which can be gripped and by which the pin can be pulled out of the knot (12).

7. Use of a pin according to claim 6, **characterised in that** the traction means is formed as a cable.

8. Use of a pin according to at least one of claims 1 to 7, **characterised in that** at the other end (3) a cross-sectional enlargement is formed which prevents further penetration of the elongated profile into the knot (12) beyond the cross-sectional enlargement.

9. Use of a pin according to claim 8, **characterised in that** the cross-sectional enlargement comprises a disc (4) formed perpendicularly to a longitudinal direction of the profile.

10. Use of a pin according to at least one of the preceding claims, **characterised in that** the elongated profile (1) is formed as a solid profile.

11. Use of a pin according to at least one of claims 1 to 9, **characterised in that** the elongated profile (1) is formed as a hollow profile and has two openings for a further cable.

12. Use of a pin according to at least one of the preceding claims, **characterised in that** the fixing means is formed as a fixing band (6).

## Revendications

1. Utilisation d'une broche pour insérer dans un noeud (12) d'un câble principal (10) pour empêcher que celui-ci ne se resserre entièrement avec
un profilé allongé (1) avec une extrémité libre qui peut être passée à travers le noeud (12) et
au moins un moyen de fixation flexible (6), fixé en face de l'extrémité libre (2) à une autre extrémité (3) du profilé, avec au moins une extrémité libre de moyen de fixation qui peut être enroulée à l'extérieur autour du noeud (12) lorsque l'extrémité libre (2) est passée à travers le noeud (12)
et une fermeture détachable entre l'extrémité libre (2) et au moins l'une des extrémités libres de moyen de fixation qui ferme de manière détachable l'extrémité libre (2) passée à travers le noeud (12) avec l'extrémité de moyen de fixation qui existe au moins qui est enroulée à l'extérieur autour du noeud (12).

2. Utilisation d'une broche selon la revendication 1, **caractérisée en ce que** le moyen de fixation qui existe au moins (6) est configuré élastique au moins par sections.

3. Utilisation d'une broche selon la revendication 1 ou 2, **caractérisée en ce que** la fermeture présente une ouverture (8), placée à l'extrémité libre de moyen de fixation qui existe au moins, qui peut être enfichée sur l'extrémité libre (2) pour la fermeture.

4. Utilisation d'une broche selon la revendication 3, **caractérisée en ce que** l'extrémité libre de moyen de fixation qui existe au moins est renforcée avec une sangle (7).

5. Utilisation d'une broche selon la revendication 4, **caractérisée en ce que** l'ouverture (8) est guidée à travers la sangle (7).

6. Utilisation d'une broche selon au moins l'une des revendications 1 à 5, **caractérisée en ce qu'**il est prévu un moyen de traction à l'autre extrémité qui peut être saisi et avec lequel la broche peut être retirée du noeud (12).

7. Utilisation d'une broche selon la revendication 6, **caractérisée en ce que** le moyen de traction est configuré comme un câble.

8. Utilisation d'une broche selon au moins l'une des revendications 1 à 7, **caractérisée en ce qu'**un agrandissement de section transversale, qui empêche une pénétration supplémentaire du profilé allongé à l'intérieur du noeud au-delà de l'agrandissement de section transversale, est configuré à l'autre extrémité (3).

9. Utilisation d'une broche selon la revendication 8, **caractérisée en ce que** l'agrandissement de section transversale comprend un disque (4) formé perpendiculairement à une direction longitudinale du profilé.

10. Utilisation d'une broche selon au moins l'une des revendications précédentes, **caractérisée en ce que** le profilé allongé (1) est formé comme un profilé plein.

11. Utilisation d'une broche selon au moins l'une des revendications 1 à 9, **caractérisée en ce que** le profilé allongé (1) est formé comme un profilé creux et qu'il présente deux ouvertures pour un autre câble.

12. Utilisation d'une broche selon au moins l'une des revendications précédentes, **caractérisée en ce que** le moyen de fixation est formé comme une bande de fixation (6).
